(19) Europäisches Patentamt
European Patent Office
Office européen des brevets

(11) Publication number: **0 397 499 A1**

# (12) EUROPEAN PATENT APPLICATION

(21) Application number: 90305054.0

(51) Int. Cl.[5]: C08F 8/42

(22) Date of filing: 10.05.90

(30) Priority: 12.05.89 FR 8906460

(43) Date of publication of application: 14.11.90 Bulletin 90/46

(84) Designated Contracting States: AT BE CH DE DK ES GB GR IT LI LU NL SE

(71) Applicant: BP Chemicals Limited
Belgrave House 76 Buckingham Palace Road
London, SW1W 0SU(GB)

(72) Inventor: Mazeaud, Brigitte
11 rue Monge
F-75005 Paris(FR)
Inventor: Boileau, Sylvie
38 rue des Cordelieres
F-75013 Paris(FR)
Inventor: Blackborow, Richard, BP Chemicals S.A.
Centre de Recherches, Service Propriete Industrielle, BP No.6, F-13117 Lavera(FR)

(74) Representative: Denbigh, Keith Warwick et al
BP INTERNATIONAL LIMITED Patents Division Chertsey Road
Sunbury-on-Thames Middlesex, TW16 7LN(GB)

## (54) Silicon.containing polymers based on polybutene intermediate products and process for the manufacture of these polymers and intermediate products.

(57) The present invention relates to a process for manufacturing a new silicon-containing polymer comprising chains derived from a polybutene. In a first stage, a new intermediate product is prepared by an addition reaction between (i) a liquid polybutene containing per molecule one carbon-carbon double bond, 1 to 90% being of the vinylidene type, and (ii) a silicon-containing thiol having at least one hydrolysable radical. In a second stage, polycondensation of the hydrolysed intermediate product and/or polycondensation of the intermediate product with an organic compound containing at least two labile hydrogen is carried out. The new silicon-containing polymer may be used in water/gastight products, mastics or materials for filling cables.

EP 0 397 499 A1

# SILICON-CONTAINING POLYMERS BASED ON POLYBUTENE INTERMEDIATE PRODUCTS AND PROCESS FOR THE MANUFACTURE OF THESE POLYMERS AND INTERMEDIATE PRODUCTS

The present invention relates to a process for the manufacture of new silicon-containing polymers comprising chains derived from a polybutene, as well as the intermediate products obtained by the process. The new silicon-containing polymers can possess elastic properties, and are intended, in particular, to be used for the manufacture of water/gastight products, mastics and filling material for electric or telephone cables.

In the field of water/gastight products and mastics there is a significant demand for cheap elastomers having a very low permeability to water and gases, a good resistance to ageing and oxidation and satisfactory dielectric properties.

In European Patent Application 0252372 preparation of an isobutylene polymer having a silicon-containing group cross-linkable by the formation of a siloxane bond was proposed. However, the isobutylene polymer used in the preparation is a particular polymer containing at least one vinylidene unsaturation per molecule. Preferably, it is prepared by Inifer method by which the polymer has a vinylidene unsaturation at each molecular end, and more particularly 1.4 to 4.5 vinylidene unsaturations per molecule. Inifer method is a multistage process for preparing the isobutylene polymer, involving a polymerisation initiator based on an organic halogen compound which produces an isobutylene polymer having, at the polymer ends, a halogen atom derived from the said organic halogen compound. Further, the halogen-containing isobutylene polymer is converted into the particular isobutylene polymer in the presence of a strong base.

In British Patent Application 2110706 preparation of elastomers by crosslinking a product resulting from the addition of an organic silicon compound or a thiol to a copolymer of isobutene and a triene, containing vinyl unsaturations was proposed. The major disadvantage of this preparation is that it uses a very specific copolymer, which is available in small quantities and costly because it contains a triene, which is a rare and costly raw material.

Thus an urgent need has appeared to develop a process for the preparation of a polymer using a polybutene which is cheap and available in large quantity.

The present invention relates more particularly to the preparation of a polymer using a liquid polybutene, in particular one free of rare and costly comonomers. Its subject is a process for the manufacture of a silicon-containing polymer comprising chains derived from a polybutene, characterised in that

a) in a first stage an intermediate product is prepared under conditions allowing the production of free radicals, by an addition reaction between (i) a liquid polybutene obtained by polymerisation of one or more oelfins having 4 carbon atoms, this polybutene containing one carbon-carbon double bond per molecule, 1 to 90% being of the vinylidene type and (ii) at least one silicon-containing thiol of general formula $HS\text{-}R^1\text{-}SiR_n^2X_{3\text{-}n}$ in which $R^1$ represents a divalent organic radical, $R^2$ a monovalent non-hydrolysable organic radical, X a monovalent hydrolysable radical and n a number equal to 0 or 1 or 2, then

b) in a second stage polycondensation of the hydrolysed intermediate product and/or polycondensation of the intermediate product with an organic compound containing at least two labile hydrogen functions is carried out.

The polybutene used to obtain the new silicon-containing polymer is a liquid polybutene prepared by polymerisation of one or more olefins containing 4 carbon atoms. It can be prepared by polymerisation or copolymerisation of 1-butene and of cis-2-butene and trans-2-butene, in particular using a catalyst of the cationic type. Also, it can be prepared by polymerisation of isobutene, or by copolymerisation of isobutene with 1-butene and/or the 2-butenes, using a catalyst of the Friedel-Crafts type, such as aluminium trichloride, boron trifluoride, tin tetrachloride or titanium tetrachloride, or a chlorinated organoaluminium derivative, optionally in the presence of a cocatalyst such as hydrochloric acid, tert-butyl chloride or water. The polybutene can advantageously be prepared by copolymerisation of a mixture containing from 30 to 90% by weight of isobutene and from 10 to 70% by weight of 1-butene and 2-butenes.

The best results are obtained when a liquid polybutene is used which is prepared according to a method described in the European Patent Application 0145235. More particularly, the liquid polybutene is prepared by polymerisation of one or more olefins containing 4 carbon atoms in the presence of a catalyst based on a complex of boron trifluoride and an alcohol. The temperature of the polymerisation may be from -100 to +50 °C and the contact time of the polymerisation reaction may be at least 8 minutes.

The liquid polybutene used in the present invention is free from halogen atom, and particularly free from organic halogen initiator.

The polybutene used in the present invention must contain one carbon-carbon double bond per molecule, generally placed at the end of the chain. The carbon-carbon double bond is of the vinylidene type, according to formula:

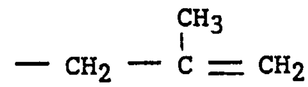

The carbon-carbon double bonds which the polybutene contains is advantageously from 1 to 90%, preferably from 40 to 85%, and more especially from 50 to 80%, of the vinylidene type. It is also preferred to use a polybutene containing from 60 to 90% of carbon-carbon double bonds of the vinylidene type. The carbon-carbon double bonds which are not of the vinylidene type, are of a trisubstituted type according to the formulae:

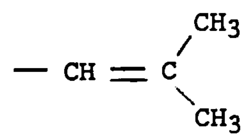

or

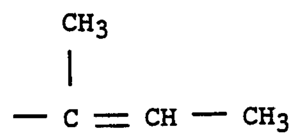

or tetrasubstituted according to formula:

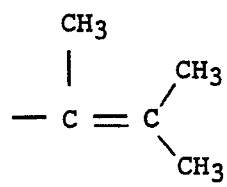

Advantageously, the polybutene contains per molecule 0.01 to 0.9, preferably from 0.4 to 0.85, especially from 0.5 to 0.8 or from 0.6 to 0.9 carbon-carbon double bonds of the vinylidene type.

The polybutene which is suitable for the present invention can have a mean molecular mass by number, measured by osmometry or by gel permeation chromatography, ranging from 200 to 10,000, preferably ranging from 300 to 5,000, and more particularly ranging from 400 to 2,500. The use of a polybutene of too low a mass leads to an addition product of relatively high volatility, while a polybutene of too high a mass leads to an addition reaction with a low yield.

Thus, the polybutene used can contain per molecule, on average, from 4 to 180, preferably from 6 to 90, and more particularly from 7 to 45 units derived from olefin. It can, consequently, contain, per molecule, from 16 to 720 carbon atoms, preferably from 24 to 360 carbon atoms, and more particularly from 28 to 180 carbon atoms.

The polybutene can also have a viscosity at 100 °C ranging from 0.002 to 100 poiseuilles, preferably from 0.01 to 20 poiseuilles, and more particularly from 0.05 to 5 poiseuilles.

In addition, the polybutene can have a relatively narrow distribution of its molecular masses, calculated by the ratio of the mean molecular mass by weight, Mw, to the mean molecular mass by number, Mn, of the polymer. This distribution can be between 1 and 5, preferably between 1 and 3.

For example, a polybutene sold by BP Chemicals (Great Britain) under the commercial name "Ultravis" (Registered Trade Mark) can be used.

In the first stage of the process the polybutene is added to a silicon-containing thiol of general formula $HS-R^1-SiR_n^2X_{3-n}$, which contains a silicon atom substituted with at least one, and preferably with 2 or 3

hydrolysable radicals X. The hydrolysable radical X bonded to the silicon atom is a radical which is capable of giving rise by hydrolysis to a silanol function Si-OH. It is also capable of reacting with a product containing one or more functions containing a labile hydrigen, such as an alcohol, phenol, aldehyde or ketone in the enolic form, amine, carboxylic acid or silanol function. The hydrolysable radical X can be a halogen atom, such as chlorine or bromine, an alkoxy radical, such as the methoxy or ethoxy radical, or an alkoxyalkoxy, thio-alkoxy, amine, aminoxy, oxime or amide radical. The radical $R^1$ is a divalent organic radical which can have the formula $(CH_2)_p$ in which p is an integer ranging from 1 to 10. The radical $R^2$ is a monovalent non-hydrolysable radical which can be an alkyl radical containing from 1 to 10 carbon atoms. The silicon-containing thiol can be
(3-mercaptopropyl)trimethoxysilane $(CH_3O)_3SiCH_2CH_2CH_2SH$, or
(3-mercaptopropyl)triethoxysilane $(CH_3CH_2O)_3SiCH_2CH_2$-$CH_2SH$.

The present invention rests on the discovery that it is possible to prepare a polycondensable intermediate product, of the organosilane type, containing a polybutene chain. This invention is based on the astonishing fact that a thiol can be added to a polybutene having less than one carbon-carbon double bond of the vinylidene type per molecule. It is also quite surprising to add a thiol to such a polybutene having a relatively high molecular mass just as well as to that of an olefin of low melocular mass.

In addition, in spite of the relatively branched structure of the polybutene, which contains one or two ethyl or methyl side chains per monomer unit, it is noted with surprise that substantially no by-product is formed during the two stages of the process.

According to the invention, in a first stage an intermediate product is prepared by an addition reaction between the polybutene and the silicon-containing thiol in conditions which allow the production of free radicals. The addition reaction can, in particular, be carried out in the presence of free radical generators or of ultraviolet radiation. Free radical generators are well known, and as examples there may be mentioned peroxides such as dibenzoyl peroxide, dicyclohexylperoxy-dicarbonate, tert-butyl perbenzoate, lauryl peroxide, isobutyryl peroxide, tert-butylperoxyacetate, and dicumyl peroxide, or even compounds containing an azo-function, such as azo-bis-isobutyronitrile, or even oxygen, or a mixture of these compounds. Photochemical techniques using ultraviolet rays or natural light, optionally in the presence of air or of oxygen, can also be used. The choice between the photochemical technique and the use of free radical generators depends on the nature of the reagents used, in particular on the organic compound possessing the thiol function.

One of the parameters in the preparation of the intermediate product is the choice of medium in which the addition reaction takes place. Astonishingly, the addition reaction can be carried out without a solvent, that is to say in bulk in liquid polybutene. In spite of the relatively high viscosity of polybutene, it is noted that the addition reaction takes place with a satisfactory yield. The choice of medium in which the addition reaction takes place depends on the nature of the polybutene and of the silicon-containing thiol. In certain cases the addition reaction can be carried out in a solvent which is appropriate for the dissolution of the polybutene and inert with respect to the silicon-containing thiol. The solvent used can be chosen from the saturated hydrocarbons, the aromatic hydrocarbons or the halogenated hydrocarbons. For example, 1,2-dichloroethane or dichloromethane can be used.

The temperature at which the silicon-containing thiol adds most advantageously to the polybutene depends on the nature of the reagents, on the choice of the free radical generators or the photochemical technique used, and on the medium in which the reaction takes place. It is generally between -20° C and +200° C, and preferably between 0° C and 100° C. When the addition reaction takes place in the presence of a free radical generator, the reaction temperature is, in particular, linked to the decomposition temperature of this generator.

Another parameter in the preparation of the intermediate product is the molar ratio between the quantities of silicon-containing thiol and polybutene. It turns out that in spite of the relatively high molecular mass of the polybutene, and its branched structure, equimolar quantities of polybutene and silicon-containing thiol can be used. This is one of the surprising characteristics of the invention which brings about a very worthwhile result, in that it is possible to add a silicon-containing thiol to a polybutene molecule, and thus to be able to functionalize the polybutene molecule. It is possible to carry out the addition reaction with a molar excess of the silicon-containing thiol with respect to the polybutene.

The intermediate product obtained during the first stage of the process is a thioether containing on either side of the sulphur atom, on the one hand a polybutene chain, and on the other hand the molecule attached to the silicon-containing thiol. This intermediate product is also an organosilane possessing a polybutene chain. It has the following general formula $R^3$-S-$R^1SiR^2_nX_{3-n}$, in which $R^1$, $R^2$ and X are the radicals of the silicon-containing thiol which are defined above, n is an integer equal to 0 or 1 or 2, and $R^3$ a radical derived from the liquid polybutene, prepared by polymerization of one or more olefins having 4

carbon atoms, the liquid polybutene containing one carbon-carbon double bond per molecule, 1 to 90% being of the vinylidene type. The radical $R^3$ may have a mean molecular mass by number of between 200 and 10,000, and preferably between 330 and 5,000.

The process of the present invention comprises a second stage which consists in a polycondensation reaction of the intermediate product. The reaction can be a polycondensation reaction of the intermediate product with itself, when the latter has previously been converted to an active form by a hydrolysis reaction. In practice, polycondensation is carried out by putting the intermediate product in contact with water, for example with a humid atmosphere. The hydrolysable radicals X of the intermediate product react with water to form an intermediate hydrolysed product, containing active and unstable silanol groupa Si-OH and corresponding to the general formula $R^3$-S-$R^1$-$SiR^2_n(OH)_{3-n}$ in which $R^1$, $R^2$, $R^3$ and n have the same definitions as above. The hydrolysed intermediate product, because of its instability, is immediately polycondensed with itself.

Polycondensation can be carried out in the presence of one or more other silicon compounds containing at least one hydrolysable radical Y bonded to the silicon atom. The silicon compound can correspond to the general formula $SiR^4_mY_{4-m}$ in which $R^4$ is a monovalent non-hydrolysable radical, which may be identical with or different from $R^2$, in particular an alkyl radical having from 1 to 10 carbon atoms, Y is a monovalent hydrolysable radical, which may be identical to or different from the radical X which exists in the intermediate product and corresponds to the same definition, and m is an integer from 0 to 3, preferably from 0 to 2. In particular, the hydrolysable radical Y can be an alkoxy group having from 1 to 10 carbon atoms. The silicon compound can be a polysiloxane containing Si-OR groups wherein R represents an alkyl group having 1 to 10 carbon atoms. In practice, polycondensation is carried out by mixing this silicon compound or these silicon compounds with the intermediate product, then putting the mixture thus obtained in contact with water. This contact with water allows the active and unstable hydrolysed forms to be obtained, which correspond to the general formula $SiR^4_m(OH)_{4-m}$ in which $R^4$ and m have the same definitions as above, these forms being capable of polycondensing with the hydrolysed intermediate product.

In all cases, the final product obtained is a silicon-containing polymer. More precisely, it can be the result of the polycondensation reaction of the hydrolysed intermediate product of general formula $R^3$-S-$R^1SiR^2_n(OH)_{3-n}$ with itself. It can also be the result of the polycondensation reaction of a mixture of the hydrolysed intermediate product and of the hydrolysed silicon compound of general formula $SiR^4_m(OH)_{4-m}$ with themselves. In particular, the silicon-containing polymer is a polysiloxane with a linear or tridimensional structure, in which part or all of the silicon atoms are directly bonded to the monovalent group of general formula $R^3$-S-$R^1$- in which $R^3$ and $R^1$ have the same definitions as above.

A variant of the polycondensation reaction consists in polycondensing the intermediate product with an organic compound containing at least two function having labile hydrogen, which are capable of reacting with the hydrolysable groups X of the intermediate product. In practice, polycondensation is carried out by putting the organic compound in contact with the intermediate product. The organic compound must contain at least two functions having labile hydrogen, which can be chosen from the alcohol, phenol, aldehyde or ketone in the enolic form, amine, carboxylic acid or silanol functions. It is preferred to use a polyol, in particular a diol, such as ethyleneglycol. The polycondensation reaction can also be carried out in the presence of one or more other silicon compounds containing at least one hydrolysable radical Y bonded to the silicon atom, and capable of corresponding to the general formula $SiR^4_mY_{4-m}$, which is defined above. In this case, polycondensation is carried out by mixing this silicon compound or these silicon compounds with the intermediate product, then putting the mixture thus obtained in contact with the organic compound containing at least the two functions having labile hydrogen. In all cases, the final product obtained is a silicon-containing polymer resulting from the polycondensation of the intermediate product of general formula $R^3$-S-$R^1SiR^2_nX_{3-n}$, optionally in a mixture with at least one silicon compound of general formula $SiR^4_mY_{4-m}$, with the organic compound containing at least two functions having labile hydrogen.

Another variant of the polycondensation reaction can consist in a combination of the two methods described above. In this case, polycondensation is carried out by putting the intermediate product and the organic compound containing at least two functions having labile hydrogen in contact with water, and optionally with the silicon compound containing at least one hydrolysable radical Y bonded to the silicon atom. The final product obtained is a silicon-containing polymer which is a mixture of the products obtained by the two polycondensation methods described above.

Whatever method is used to carry out the polycondensation reaction, the latter can be carried out at a temperature from 0°C to 150°C, preferably from 10°C to 100°C, and more particularly at a temperature close to the ambient temperature. The duration of polycondensation can range from a few minutes to several weeks, and in particular from 3 minutes to two weeks, as a function of the temperature chosen. It

can be carried out in the presence of a catalyst containing a heavy metal compound, such as dibutyldilauryltin, tin octanoate, tin dibutyloxide or lead cyclohexanebutyrate, or a metal alkoxide such as titanium tetrabutylate, or amines, bases or even acids such as acetic acid. The quantity of catalyst used generally represents from 0.01 to 10% by weight of the quantity of products to be polycondensed. In addition, the polycondensation reaction can be carried out in an inert solvent. It can be facilitated by removing from the reaction medium the light product resulting from the polycondensation and corresponding to the general formula $R^2H$, in whic $R^2$ corresponds to the same definition as above.

The silicon-containing polymer is in the form of a viscous liquid, a gel or a solid having elastic properties. It is impermeable to liquids, in particular to water, and to gases, and possesses good resistance to ageing and to the phenomena of oxidation. It can be used in water/gastight products or in mastics. It can also be used as a filling material for electric or telephone cables which are watertight and gas-tight.

Example 1

Into a 50 ml quartz flask, maintained under an atmosphere of perfectly dry air, are introduced, with stirring, 4.2616 g of "Ultravis 10" (Registered Trade Mark) polybutene sold by BP Chemicals (Great Britain) having a mean molecular mass by number, about 78% of which are of the vinylidene type, 0.8312 g of (3-mercaptopropyl)trimethoxysilane $HSCH_2CH_2CH_2Si(OCH_3)_3$ and 6 ml of perfectly anhydrous toluene, which is used as solvent. The mixture thus obtained is subjected at ambient temperature (20 °C) to irradiation by ultraviolet radiation. At the end of a time of 9 and a quarter hours, the solvent used and the residual (3-mercaptopropyl)trimethoxysilane are removed by evaporation, and an intermediate product is obtained which is in the form of a viscous, transparent liquid of a yellow colour. This intermediate product is analysed by infrared spectroscopy and by proton nuclear magnetic resonance, and disappearance of 75% of the carbon-carbon bonds of the "Ultravis 10" (Registered Trade Mark) polybutene is noted.

To the whole of the intermediate product obtained are then added 2 ml of ethanol, 10 ml of water and 2 drops of acetic acid. This second mixture thus obtained is agitated at ambient temperature for 2 hours, using ultrasound. At the end of this time a pasty product is recovered to which is added 10 ml of dichloromethane and 4 ml of absolute ethanol, so as to obtain 2 immiscible liquid phases. The lower phase is recovered by decantation, and after evaporation of the light products which are present, a final product is obtained in the form of a sticky transparent gel. This final product is analysed by infrared spectroscopy, and it is noted that it is free of methoxy radicals bonded to a silicon atom.

Example 2

Into a 50 ml quartz flask, maintained under an atmosphere of perfectly dry air, are introduced, with stirring, 4.7939 g of "Ultravis 10" (Registrated Trade Mark) polybutene sold by BP Chemicals (Great Britain) having a mean molecular mass by number of 1,000 and one carbon-carbon double bond per molecule, about 78% of which are of the vinylidene type, 0.8540 g of (3-mercaptopropyl) triethoxysilane $HSCH_2CH_2CH_2Si(OC_2H_5)_3$ and 6 ml of perfectly anhydrous toluene, which is used as solvent. The mixture thus obtained is subjected at ambient temperature (20 °C) to irradiation by ultraviolet radiation. At the end of a time of 12 hours 30 minutes the solvent used and the residual (3-mercaptopropyl)triethoxysilane are removed by evaporation, and an intermediate product is obtained which is in the form of a viscous, transparent liquid of a yellow colour. This intermediate product is analysed by infrared spectroscopy and by proton nuclear magnetic resonance, and disappearance of 70% of the carbon-carbon bonds of the "Ultravis 10" (Registered Trade Mark) polybutene is noted.

To the whole of the intermediate product obtained are then added 10 ml of water and 3 drops of acetic acid. This second mixture thus obtained is then agitated at ambient temperature for 4 hours using ultrasound. At the end of this a very pasty product is recovered to which are added 10 ml of dichloromethane and 10 ml of water so as to obtain 2 immiscible liquid phases. The lower phase is recovered by decantation and then the light products are removed by evaporation and a final product is obtained in the form of an elastic solid. This final product is analysed by infrared spectroscopy and it is noted that it is free of ethoxy radicals bonded to a silicon atom.

Example 3

Into a 50 ml glass flask, maintained under an atmosphere of perfectly dry air, are introduced, with stirring, 4.8890 g of "Ultravis 10" (Registered Trade Mark) polybutene sold by BP Chemicals (Great Britain) having a mean molecular mass by number of 1,000 and one carbon-carbon double bond per molecule, about 78% of which are of the vinylidene type, 1.039g of (3-mercaptopropyl)trimethoxysilane $HSCH_2CH_2CH_2Si(OCH_3)_3$, 0.0280 g of azobisisobutyronitrile and 10 ml of perfectly anhydrous toluene, which is used as solvent. The addition reaction is carried out under a current of perfectly dry air at a temperature of 80° C for 40 hours. At the end of this time the reaction mixture is cooled to ambient temperature (20° C). After evaporation of the solvent used and the residual (3-mercaptopropyl)-trimethoxysilane an intermediate product is recovered in the form of a viscous transparent liquid of a yellow colour. This intermediate product is analysed by infrared spectroscopy and by proton nuclear magnetic resonance, and disappearance of 40% of the carbon-carbon bonds of the polybutene is noted.

The whole of the intermediate product is then left in humid ambient air for 10 days. At the end of this time all the substances soluble in dichloromethane are removed by means of a Soxhlet-type extractor. A final product is thus obtained which is insoluble in dichloromethane and which is in the form of a sticky elastic solid. This final product is analysed by infrared spectroscopy and it is noted that it is free of methoxy radicals bonded to a silicon atom.

Example 4

Into a 50 ml quartz flask, maintained under an atmosphere of perfectly dry air, are introduced, with stirring, 4.9493 g of "Ultravis 10" (Registered Trademark) polybutene sold by BP Chemicals (Great Britain) having a mean molecular mass by number of 1,000 and one carbon-carbon double bond per molecule, about 78% of which are of the vinylidene type, 0.5 g of (3-mercaptopropyl)methyldimethoxysilane $HSCH_2CH_2CH_2SiCH_3(OCH_3)_2$ and 5 ml of perfectly anhydrous toluene, which is used as solvent. The mixture thus obtained is subjected at ambient temperature (20° C) to irradiation by ultraviolet radiation. At the end of a time of 17 hours the solvent used and the residual (3-mercaptopropyl)methyldimethoxysilane are removed by evaporation and an intermediate product is obtained in the form of a viscous, transparent colourless liquid. This intermediate product is analysed by infrared spectroscopy and by proton nuclear magnetic resonance, and disappearance of 40% of the carbon-carbon bonds of the "Ultravis 10" (Registered Trademark) polybutene is noted.

The whole of the intermediate product is then left in humid ambient air for 10 days. At the end of this time a final product is recovered which is in the form of a liquid which is markedly more viscous than the intermediate product and sticky. This final product is analysed by infrared spectroscopy, and it is noted that it is free of methoxy radicals bonded to a silicon atom.

Example 5

Into a 50 ml glass flask maintained under an atmosphere of perfectly dry air are introduced, with stirring, 5.2780 g of "Ultravis 10" (Registered Trademark) polybutene sold by BP Chemicals (Great Britain) having a mean molecular mass by number of 1,000 and one carbon-carbon double bond per molecule, about 78% of which are of the vinylidene type, 0.7962 g of (3-mercaptopropyl)triethoxysilane and 0.0516 g of dicyclohexylperoxydicarbonate. The addition reaction is carried out under a current of perfectly dry air at a temperature of 35° C for 88 hours. At the end of this time an intermediate product is recovered in the form of a viscous transparent liquid which is slightly yellow. This intermediate product is analysed by infrared spectroscopy and by proton nuclear magnetic resonance, and disappearance of 70% of the carbon-carbon bonds of the polybutene is noted.

To the whole of the intermediate product obtained are then added 2 ml of ethanol, 10 ml of water and 2 drops of acetic acid. This mixture thus obtained is stirred at ambient temperature for 3 hours using ultrasound. At the end of this time a pasty product is obtained to which are added 10 ml of dichloromethane and 4 ml of absolute ethanol so as to obtain 2 immiscible liquid phases. The lower phase is recovered by decantation, and after evaporation of the light product which are present a final product is obtained which is in the form of a sticky transparent gel. This final product is analysed by infrared spectroscopy, and it is noted that it is free of ethoxy radicals bonded to a silicon atom.

## Claims

1. Process for the manufacture of a silicon-containing polymer comprising chains derived from a polybutene, characterized in that

a) in a first stage an intermediate product is prepared under conditions allowing the production of free radicals, by an addition reaction bteween (i) a liquid polybutene obtained by polymerization of one or more olefins having 4 carbon atoms, this polybutene containing one carbon-carbon double bond per molecule, 1 to 90% being of the vinylidene type, and (ii) at least one silicon-containing thiol of general formula $HS\text{-}R^1\text{-}SiR^2_nX_{3-n}$ in which $R^1$ represents a divalent organic radical, $R^2$ a monovalent non-hydrolysable organic radical, X a monovalent hydrolysable radical and n a number equal to 0 or 1 or 2, then

b) in a second stage polycondensation of the hydrolysed intermediate product and/or polycondensation of the intermediate product with an organic compound containing at least two labile hydrogen functions is carried out.

2. Process according to Claim 1, characterized in that the polybutene is a polymer of 1-butene, of 2-butenes or of isobutene, or a copolymer of 1-butene with the 2-butenes, or a copolymer of isobutene with 1-butene and/or the 2-butenes, prepared using a catalyst, based on a complex of boron trifluoride and an alcohol.

3. Process according to Claim 1, characterized in that the polybutene has a mean molecular mass by number ranging from 200 to 10,000.

4. Process according to Claim 1, characterized in that the silicon-containing thiol has the general formula $HS\text{-}R^1\text{-}SiR^2_nX_{3-n}$ in which $R^1$ is a divalent organic radical of formula $(CH_2)_p$, p being an integer from 1 to 10, $R^2$ is an alkyl radical containing from 1 to 10 carbon atoms, X is a halogen atom or an alkoxy, alkoxyalkoxy, thioalkoxy, amine, aminoxy, oxime or amide radical and n a number equal to 0 or 1 or 2.

5. Process according to Claim 1, characterized in that the addition reaction is carried out at a temperature of between -20° C and +200° C.

6. Process according to Claim 1, characterized in that the addition reaction is carried out in the presence of free radicals, or according to a photochemical technique using ultraviolet radiation or natural light, optionally in the presence of air or of oxygen.

7. Process according to Claim 1, characterized in that polycondensation is carried out by putting the intermediate product in contact with water.

8. Process according to Claim 1, characterized in that polycondensation is carried out by putting the intermediate product in contact with an organic compound containing at least two functions, which may be identical or different, chosen from the alcohol, phenol, aldehyde or ketone in the enolic form, amine, carboxylic acid or silanol functions.

9. Process according to Claim 1, characterized in that polycondensation is carried out at a temperature of between 0° C and 150° C.

10. Process according to Claim 1, characterized in that polycondensation is carried out in the presence of one or more other silicon compounds containing at least one hydrolysable radical bonded to a silicon atom.

11. New intermediate product of general formula $R^3\text{-}S\text{-}R^1\text{-}SiR^2_nX_{3-n}$ in which $R^1$ is a divalent organic radical, $R^2$ is a non-hydrolysable monovalent organic radical, X is a hydrolysable monovalent radical, n is a number equal to 0 or 1 or 2 and $R^3$ is a monovalent radical derived from a liquid polybutene prepared by polymerization of one or more olefins having 4 carbon atoms, the liquid polybutene containing one carbon-carbon double bond per molecule, 1 to 90% being of the vinylidene type.

12. New intermediate product according to Claim 11, characterized in that the radical $R^1$ is a divalent organic radical of formula $(CH_2)_p$, p being an integer from 1 to 10, $R^2$ is an alkyl radical having from 1 to 10 carbon atoms and X is an alkoxy, alkoxyalkoxy, thioalkoxy, amine, aminoxy, oxime or amide radical or a halogen atom.

13. Silicon-containing polymer, obtained by polycondensation of a product of general formula $R^3\text{-}S\text{-}R^1\text{-}SiR^2_n(OH)_{3-n}$ with itself, in which formula $R^1$ is a divalent organic radical, $R^2$ is a non-hydrolysable monovalent organic radical, $R^3$ is a monovalent radical derived from a liquid polybutene prepared by polymerization of one or more olefins having 4 carbon atoms, the liquid polybutene containing one carbon-carbon double bond per molecule, 1 to 90% being of the vinylidene type, and n is a number equal to 0 or 1 or 2.

14. Silicon-containing polymer, obtained by polycondensation of a mixture of a silicon compound of general formula $SiR^4_m(OH)_{4-m}$ and a product of general formula $R^3\text{-}S\text{-}R^1\text{-}SiR^2_n(OH)_{3-n}$, in which formulae $R^1$ is a divalent organic radical, $R^2$ and $R^4$, being identical or different, are non-hydrolysable monovalent organic radicals, $R^3$ is a monovalent radical derived from a liquid polybutene prepared by polymerization of one or more olefins having 4 carbon atoms, the liquid polybutene containing one carbon-carbon double

bond per molecule, 1 to 90% being of the vinylidene type, n is a number equal to 0 or 1 or 2 and m is an integer ranging from 0 to 3.

15. Silicon-containing polymer, obtained by polycondensation of a product of general formula $R^3$-S-$R^1$-$SiR^2_nX_{3-n}$ with an organic compound containing at least two functions having labile hydrogen which are capable of reacting with the radical X, in which formula $R^1$ is a divalent organic radical, $R^2$ is a non-hydrolysable monovalent organic radical, $R^3$ is a monovalent radical derived from a liquid polybutene prepared by polymerization of one or more olefins having 4 carbon atoms, the liquid polybutene containing one carbon-carbon double bond per molecule, 1 to 90% being of the vinylidene type, X is a hydrolysable monovalent radical and n is a number equal to 0 or 1 or 2.

16. Silicon-containing polymer, obtained by polymer condensation of a mixture of a product of general formula $R^3$-S-$R^1SiR^2_nX_{3-n}$ and of a silicon compound of general formula $SiR^4_mY_{4-m}$ with an organic compound containing at least two·functions having labile hydrogen which are capable of reacting with the X and Y radicals, in which formulae $R^1$ is a divalent organic radical, $R^2$ and $R^4$, being identical or different, are non-hydrolysable monovalent organic radicals, $R^3$ is a monovalent radical derived from a liquid polybutene prepared by polymerization of one or more olefins having 4 carbon atoms, the liquid polybutene containing one carbon-carbon double bond per molecule, 1 to 90% being of the vinylidene type, X and Y, being identical or different, are hydrolysable monovalent radicals, n is a number equal to 0 or 1 or 2 and m is an integer ranging from 0 to 3.

17. Use of a silicon-containing polymer according to one of Claims 13 to 16, in water/gastight products, mastics, or materials for filling cables.

European Patent Office

# EUROPEAN SEARCH REPORT

Application Number

EP 90 30 5054

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 252 372 (KANEGAFUCHI)<br>* Claims; page 6, line 44 - page 7, line 11; page 2, line 40 - page 3, line 6; examples 1-5,7-11,14 *<br>--- | 1-17 | C 08 F 8/42 |
| A | PATENT ABSTRACTS OF JAPAN, vol. 11, no. 24 (C-399)[2471], 23rd January 1987; & JP-A-61 197 646 (IDEMITSU PETROCHEM. CO., LTD) 01-09-1986<br>* Whole document *<br>--- | 1 | |
| A,D | GB-A-2 110 706 (ANIC)<br>* Claims *<br>----- | 1 | |

TECHNICAL FIELDS SEARCHED (Int. Cl.5)

C 08 F

The present search report has been drawn up for all claims

| Place of search | Date of completion of the search | Examiner |
|---|---|---|
| THE HAGUE | 09-07-1990 | MERGONI M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)